# EUROPÄISCHE PATENTSCHRIFT

(11) **EP 2 066 539 B1**
(45) Veröffentlichungstag und Bekanntmachung des Hinweises auf die Patenterteilung: **14.07.2010**
(21) Anmeldenummer: 07787950.0
(22) Anmeldetag: 26.07.2007
(51) Int. Cl.: B60S 3/06

(54) **FAHRZEUGWASCHANLAGE MIT MEHREREN BEHANDLUNGSAGGREGATEN**
VEHICLE WASH SYSTEM COMPRISING A PLURALITY OF TREATMENT UNITS
INSTALLATION DE LAVAGE POUR VEHICULES, MUNIE DE PLUSIEURS UNITES DE TRAITEMENT

(30) Priorität: 11.09.2006 DE 102006043198
(43) Veröffentlichungstag der Anmeldung: 10.06.2009
(73) Patentinhaber: WashTec Holding GmbH, 86153 Augsburg (DE)
(72) Erfinder: WIMMER, Georg, 86444 Affing (DE); HIRSCHMANN, Rüdiger, 86157 Augsburg (DE)
(74) Vertreter: Charrier, Rapp & Liebau
(86) Internationale Anmeldenummer: PCT/EP2007/057731
(87) Internationale Veröffentlichungsnummer: WO 2008/031668

(56) Entgegenhaltungen:
- DE-U1-202006 003 826
- FR-A1- 2 441 519
- GB-A- 1 249 145

## Beschreibung

Die Erfindung betrifft eine Fahrzeugwaschanlage mit mehreren Behandlungsaggregaten nach dem Oberbegriff des Anspruchs 1.

Fahrzeugwaschanlagen weisen in der Regel neben einer oder mehreren höhenverstellbaren horizontalen Waschaggregaten, wie z.B. Dachbürsten, auch weitere höhenverstellbare Behandlungsaaaregate in Form von horizontalen Trocknungsdüsen oder dgl. auf. Derartige horizontalen Behandlungsaggregate werden üblicherweise durch voneinander unabhängige separate Hubantriebe bewegt. In der Regel geschieht dies über einen Wickelantrieb mittel Seil- oder Flachriemen bzw. über Zahnriemenantriebe mit entsprechender Umlenkung und Gegengewichten. Jedes der Aggregate wie z.B. Dachbürsten oder horizontale Trocknungsdüsen ist hierbei mit einem eigenen Hubmotor ausgestattet. Dies erfordert allerdings einen entsprechend hohen Antriebs- und Steuerungsaufwand.

Dokument GB-A-1 249 145 offenbart eine Fahrzeugwaschanlage gemäß den Oberbegriff des Anspruchs 1.

Aufgabe der Erfindung ist es, eine Fahrzeugwaschanlage der eingangs genannten Art zu schaffen, die mit geringerem Steuerungs- und Antriebsaufwand eine zuverlässige Reinigung und Trocknung eines Fahrzeugs ermöglicht.

Diese Aufgabe wird durch eine Fahrzeugwaschanlage mit dem Merkmalen des Anspruchs 1 gelöst. Zweckmäßige Weiterbildungen und vorteilhafte Ausführungsformen der Erfindung sind Gegenstand der Unteransprüche.

Ein wesentlicher Vorteil der erfindungsgemäßen Fahrzeugwaschanlage besteht darin, dass mehrere Behandlungsaggregate über den Zugmitteltrieb durch einen einzigen Antriebsmotor bewegt werden können. Dadurch kann die Anzahl der Antriebsmotoren reduziert und der Steuerungsaufwand verringert werden. Durch das vereinfachte Antriebskonzept ist außerdem eine Kostenersparnis möglich.

In einer besonders zweckmäßigen Ausführungsform umfasst der Zugmitteltrieb ein Zugorgan und Umlenkrollen, über die das Zugorgan von einem durch den Antriebsmotor drehbaren Antriebselement zu einem der Behandlungsaggregate geführt ist. Die Führung des z.B. als Seil, Riemen oder Kette ausgeführten Zugorgans kann derart gestaltet sein, dass der Antriebsmotor stationär an dem Rahmen befestigt ist , wobei das Zugorgan ausgehend von dem Antriebsmotor zunächst über eine Umlenkrolle an dem einen Behandlungsaggregat in Art einer losen Rolle eines Flaschenzugs geführt, des weiteren über stationäre Umlenkrollen am Rahmen ein zweites Mal umgelenkt und anschließend am zweiten Behandlungsaggregat befestigt wird.

In einer alternativen Ausführung kann der Antriebsmotor aber auch an einem der beiden höhenverstellbaren Behandlungsaggregate befestigt und das Zugorgan von dort nur über stationäre Umlenkrollen am Rahmen zu dem zweiten Behandlungsaggregat geführt sein.

Der Antrieb kann z.B. als Wickelantrieb ausgeführt sein, wobei das eine Ende des Zugorgans auf eine durch den Antriebsmotor drehbare Antriebsrolle aufgewickelt und das andere Ende des Zugorgans mit dem ersten Behandlungsaggregat verbunden ist. Besonders bei Verwendung einer Kette oder eines Zahnriemens als Zugorgan kann der Antrieb aber auch über eine Umlenkung und ein formschlüssiges Antriebselement in Form eines Kettenrads, einer Riemenscheibe oder dgl. erfolgen.

Mindestens einem der Behandlungsaggregate ist eine Verriegelungseinrichtung zugeordnet, durch die das jeweilige Behandlungsaggregat in einer vorgegeben Endstellung, vorzugsweise der oberen Endlage, arretiert werden kann. Sofern die Behandlungsaggregate einen ausreichend großen Gewichtsunterschied aufweisen, kann die Verriegelungseinrichtung nur für das schwerere Behandlungsaggregat vorgesehen werden. Es können aber auch an beiden Behandlungsaggregaten entsprechende Verriegelungseinrichtungen angebracht sein.

Der Rahmen kann bei einer Portalwaschanlage z.B. als verfahrbares Portal ausgebildet sein, wobei die Waschbürsten und die Trocknungsdüse während der Reinigung neben der horizontalen Verstellung auch in Längsrichtung des Fahrzeugs bewegt werden. Im Falle einer Waschstrasse, bei der die Fahrzeuge während der Reinigung z.B. durch Förderbänder oder Förderketten in der Fahrzeuglängsrichtung verschoben werden, kann der Rahmen aber auch stationär ausgeführt sein.

Weitere Besonderheiten und Vorzüge der Erfindung ergeben sich aus der folgenden Beschreibung zweier Ausführungsbeispiele anhand der Zeichnung. Es zeigen:
- **Figur 1**: eine schematische Seitenansicht eines Teils einer Fahrzeugwaschanlage mit einer horizontalen Waschbürste und einer horizontalen Trocknungseinrichtung in einer ersten Betriebsstellung;
- **Figur 2**: eine schematische Seitenansicht des Teils der Fahrzeugwaschanlage von Figur 1 in einer zweiten Betriebsstellung;
- **Figur 3**: eine schematische eines Teils einer weiteren Fahrzeugwaschanlage mit einer horizontalen Waschbürste und einer horizontalen Trocknungseinrichtung in einer ersten Betriebsstellung und
- **Figur 4**: eine schematische Seitenansicht des Teils der Fahrzeugwaschanlage von Figur 3 in einer zweiten Betriebsstellung.

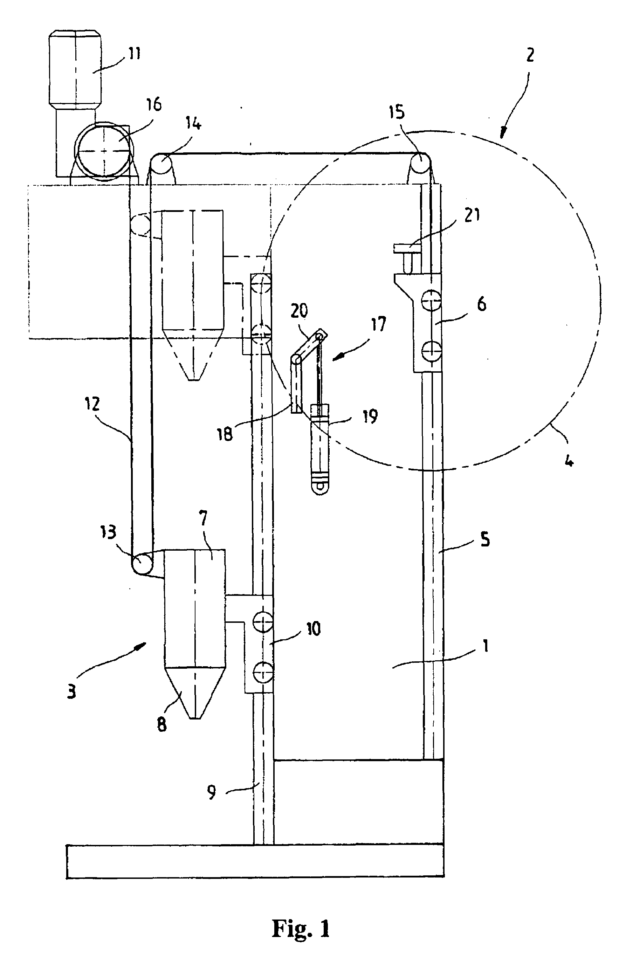

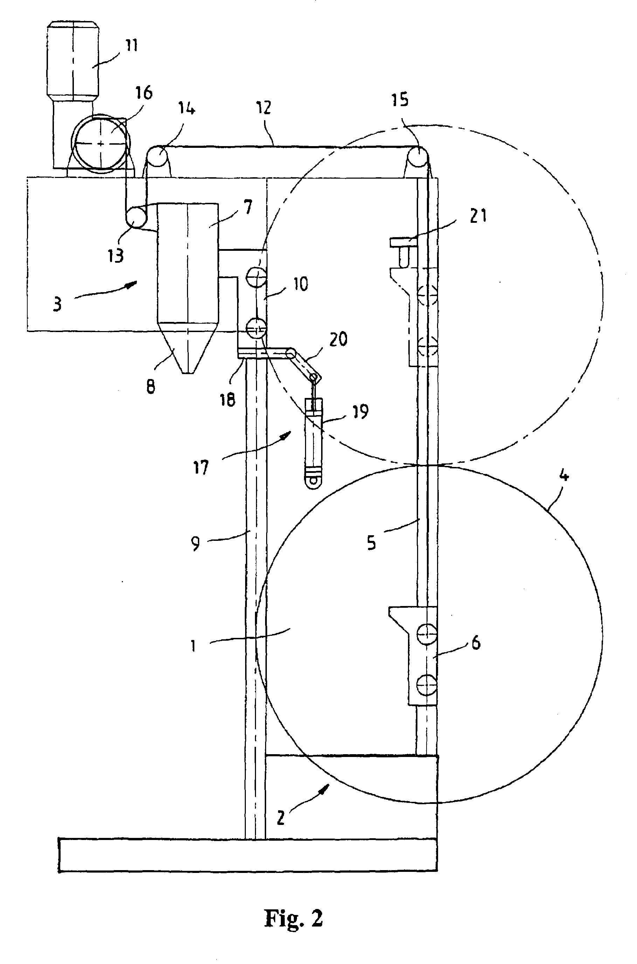

Die in den Figuren 1 und 2 in einer Seitenansicht in unterschiedlichen Stellungen schematisch dargestellte Fahrzeugwaschanlage enthält einen hier als Portal ausgeführten Rahmen 1, an dem ein als Horizontalbürste ausgeführtes erstes Behandlungsaggregat 2 und ein als Trocknungseinrichtung ausgebildetes zweites Behandlungsaggregat 3 höhenverstellbar angeordnet sind. Das erste Behandlungsaggregat 2 enthält eine um eine Horizontalachse drehbare Waschbürste und durch einen Motor angetriebene Waschbürste 4, die über vertikale Führungen 5 und Führungsschlitten 6 vertikal verschiebbar an dem Rahmen 1 geführt ist. Das zweite Behandlungsaggregat 3 ist bei der gezeigten Ausführung als horizontaler Dachtrockner mit einem Gehäuse 7 und einer nach unten gerichteten Austrittsdüse 8 ausgeführt, die quer zur Fahrzeuglängsrichtung über die gesamte Fahrzeugbreite verlaufen und über vertikale Führungen 9 sowie dazugehörige Führungsschlitten 10 ebenfalls vertikal verschiebbar an dem als Portal ausgeführten Rahmen 1 geführt sind. Durch die Austrittsdüse 8 kann ein von einem Gebläse erzeugter und in das Gehäuse 7 eingeleiteter Luftstrom zur Trocknung eines Fahrzeugs nach der Fahrzeugwäsche auf die Oberseite des Fahrzeugs gerichtet werden. Die Fahrzeugwaschanlage enthält neben der Horizontalbürste auch Seitenbürsten und Seitentrockner, die hier jedoch nicht dargestellt sind. Diese können ebenfalls an dem portalartigen Rahmen 1 oder einem weiteren Portal oder Rahmen angeordnet sein.

Bei dem in den Figuren 1 und 2 dargestellten Ausführungsbeispiel ist auf dem als Portal ausgeführten Rahmen 1 ein Antriebsmotor 11 angeordnet, der über ein als Seil, Riemen oder als Kette ausgeführtes Zugorgan 12 und diverse Umlenkrollen mit den beiden Behandlungsaggregaten 2 und 3 gekoppelt ist. Das Zugorgan 12 ist über eine erste Umlenkrolle 13 an dem zweiten Behandlungsaggregat 3 und zwei stationäre Umlenkrollen 14 und 15 am Gestell 1 geführt, wobei das eine Ende des Zugorgans 12 auf einer durch den Antriebsmotor 11 drehbaren Antriebsrolle 16 aufgewickelt und das andere Ende des Zugorgans 12 an dem ersten Behandlungsaggregat 2 befestigt ist.

An dem Rahmen 1 ist ferner eine Verriegelungseinrichtung 17 befestigt, durch die das zweite Behandlungsaggregat 3 in einer oberen Endlage arretiert werden kann. Bei dem gezeigten Ausführungsbeispiel besteht die Verriegelungseinrichtung 17 aus einem schwenkbaren Anschlag 18, der durch einen pneumatisch oder hydraulisch betätigten Stellzylinder oder einen anderen geeigneten Stellantrieb 19 über einen Hebel 20 zwischen einer nach unten geklappten Freigabestellung gemäß Figur 1 und einer nach oben geklappten Arretierstellung gemäß Figur 2 verschwenkt werden kann. In der nach oben geklappten Arretierstellung liegt der Anschlag 18 an der Unterseite des Schlittens 10 an und verhindert ein Absenken des zweiten Behandlungsaggregats 3. An dem Rahmen 1 ist außerdem ein oberer Anschlag 21 für das erste Behandlungsaggregat 2 befestigt.

Zwischen den beiden Behandlungsaggregaten 2 und 3 besteht bei der gezeigten Ausführung ein Gewichtsunterschied, wobei das erste Behandlungsaggregat 2 leichter als das zweite Behandlungsaggregat 3 ist und der Gewichtsunterschied derart gewählt ist, dass das erste Behandlungsaggregat 2 von dem schwereren zweiten Behandlungsaggregat 3 gemäß Figur 1 gegen den Anschlag 21 gezogen wird, sofern das zweite Behandlungsaggregat 3 nicht arretiert ist.

Wenn bei der in Figur 1 dargestellten Stellung das Zugorgan 12 durch entsprechende Drehung der Antriebsrolle 16 aufgewickelt wird, wird das zweite Behandlungsaggregat 3 angehoben und kann aus einer durchgezogen dargestellten unteren Stellung in eine gestrichelt dargestellte obere Endstellung bewegt werden. Wird das zweite Behandlungsaggregat 3 durch Betätigung der Verriegelungseinrichtung 17 gemäß Figur 2 in der oberen Endstellung arretiert, wirkt die Umlenkrolle 13 als stationäre Umlenkrolle und das erste Behandlungsaggregat 2 kann durch entsprechende Drehung der Antriebsrolle 16 nach oben oder unten bewegt werden.

Sofern die Behandlungsaggregate einen ausreichend großen Gewichtsunterschied aufweisen, wird die Verriegelungsvorrichtung nur an dem schwereren Behandlungsaggregat benötigt, da sich bei Betätigung des Antriebsmotors nur das schwerere Behandlungsaggregat bewegen wird und das leichtere gegen die mechanischen Endanschläge gezogen wird. Bei anderen Gewichtsverhältnissen können aber auch an beiden Behandlungsaggregaten Verriegelungsvorrichtungen vorgesehen sein.

Bei diesem Antriebsprinzip können die beiden Behandlungsaggregate durch einen einzigen Antriebsmotor wechselweise verstellt werden. Wenn es sich bei dem ersten Behandlungsaggregat z.B. um eine Waschbürste und bei dem zweiten Behandlungsaggregat um eine Trocknungseinrichtung an einem Portal handelt, stellt dies jedoch keinerlei Einschränkungen im Betrieb der Fahrzeugwaschanlage dar, da die Waschbürste und die Trocknungseinrichtung ohnehin in getrennten Überläufen des Portals wirksam sind.

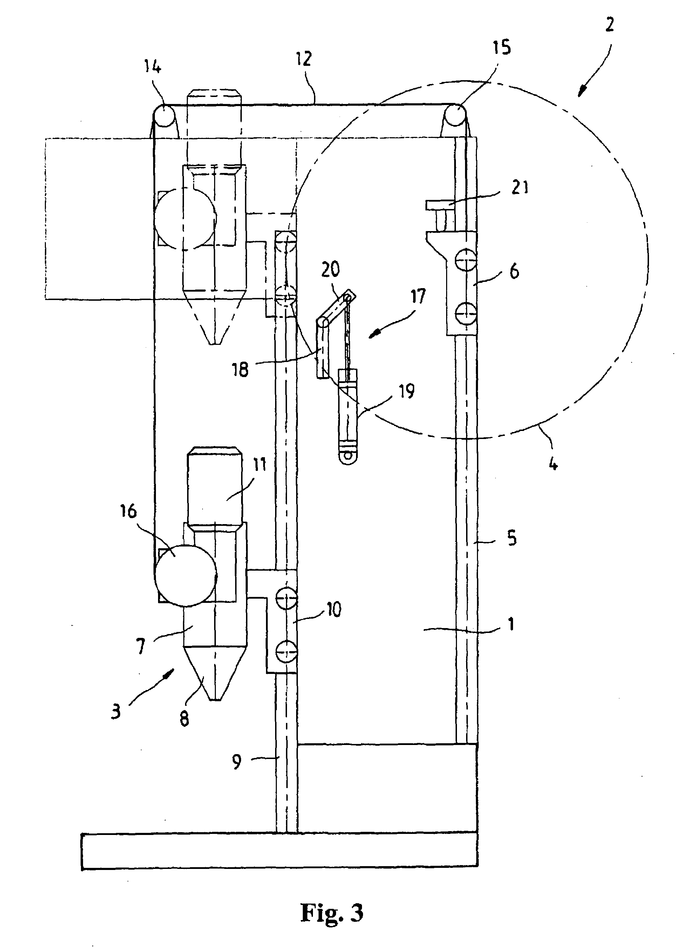

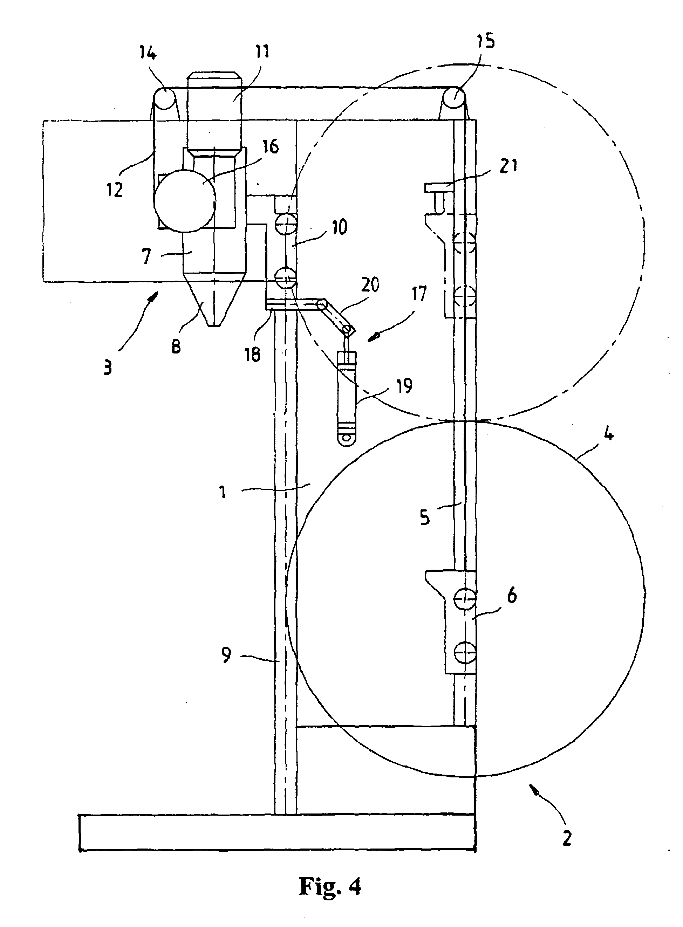

Die in den Figuren 3 und 4 dargestellte zweite Ausführungsform einer Fahrzeugwaschanlage unterscheidet sich von der ersten Ausführungsform lediglich dadurch, dass der Antriebsmotor 11 mit der Antriebsrolle 16 nicht stationär an dem Rahmen 1, sondern an dem vertikal beweglichen zweiten Behandlungsaggregat 3 angeordnet sind. Da der Grundaufbau ansonsten der Ausführungsform von Figur 1 und 2 entspricht, sind einander entsprechend Bauteile auch mit denselben Bezugszeichen versehen. Das Zugorgan 12 ist hier nur über zwei auf dem Rahmen 1 stationär angeordnete Umlenkrollen 14 und 15 geführt, wobei das eine Ende des Zugorgans 12 an dem ersten Behandlungsaggregat 2 befestigt und das andere Ende des Zugorganes 12 auf die Antriebsrolle 16 des am zweiten Behandlungsaggregat 3 befestigten Antriebsmotors 11 aufgewickelt ist.

Wird bei der in Figur 3 dargestellten Stellung die Antriebsrolle 16 durch dem Antriebsmotor 11 zum Aufwickeln des Zugorgans 12 gedreht, wird auch hier das zweite Behandlungsaggregat 3 angehoben und kann aus einer durchgezogen dargestellten unteren Stellung in eine gestrichelt dargestellte obere Endstellung bewegt werden. Wird das zweite Behandlungsaggregat 3 durch Betätigung der Verriegelungseinrichtung 17 gemäß Figur 4 in der oberen Endstellung arretiert, kann das Behandlungsaggregat 2 kann durch entsprechende Drehung der Antriebsrolle 16 abgesenkt und wieder angehoben werden.

Die Erfindung ist nicht auf die vorstehend beschriebenen und in den Zeichnungen dargestellten Ausführungsbeispiele beschränkt. So können durch das beschriebene Antriebskonzept anstelle der horizontalen Waschbürste und der horizontalen Trocknungseinrichtung selbstverständlich auch andere Bearbeitungsaggregate bewegt werden.

## Patentansprüche

1. Fahrzeugwaschanlage mit einem an einem Rahmen (1) höhenverstellbar angeordneten ersten Behandlungsaggregat (2) und mindestens einem an dem Rahmen (1) höhenverstellbar angeordneten zweiten Behandlungsaggregat (3), **dadurch gekennzeichnet, dass** die Behandlungsaggregate (2, 3) zur wechselseitigen Verstellung über einen Zugmitteltrieb (12, 13, 14, 15) mit einem gemeinsamen Antriebsmotor (11) gekoppelt sind.

2. Fahrzeugwaschanlage nach Anspruch 1, **dadurch gekennzeichnet, dass** der Zugmitteltrieb (12, 13, 14, 15) ein Zugorgan (12) und Umlenkrollen (13, 14, 15) umfasst, über die das Zugorgan (12) von einem durch den Antriebsmotor (11) drehbaren Antriebselement (16) zu dem ersten Behandlungsaggregat (2) geführt ist.

3. Fahrzeugwaschanlage nach Anspruch 2, **dadurch gekennzeichnet, dass** der Antriebsmotor (11) an dem Rahmen (1) stationär befestigt und das Zugorgan (12) über eine an dem zweiten Behandlungsaggregat (3) angeordnete lose Umlenkrolle (13) und zwei am Rahmen (1) angeordnete stationäre Umlenkrollen (14, 15) geführt ist.

4. Fahrzeugwaschanlage nach Anspruch 2, **dadurch gekennzeichnet, dass** der Antriebsmotor (11) an dem höhenverstellbaren zweiten Behandlungsaggregat (3) angeordnet und das Zugorgan (12) über zwei am Rahmen (1) angeordnete stationäre Umlenkrollen (14, 15) geführt ist.

5. Fahrzeugwaschanlage nach einem der Ansprüche 2 bis 4, **dadurch gekennzeichnet, dass** das Zugorgan (12) als Seil, Riemen oder Kette ausgebildet ist.

6. Fahrzeugwaschanlage nach einem der Ansprüche 1 bis 5, **dadurch gekennzeichnet, dass** mindestens einem Behandlungsaggregat (2, 3) eine Verriegelungseinrichtung (17) zur lösbaren Arretierung des Behandlungsaggregats (1, 2) in einer Endstellung zugeordnet ist.

7. Fahrzeugwaschanlage nach Anspruch 6, **dadurch gekennzeichnet, dass** die Verriegelungseinrichtung (17) einen verstellbaren Anschlag (18) enthält, der durch einen Stellantrieb (19) zwischen einer Verriegelungs- und Entriegelungsstellung verstellbar ist.

8. Fahrzeugwaschanlage nach einem der Ansprüche 1 bis 7, **dadurch gekennzeichnet, dass** das erste Behandlungsaggregat (2) eine horizontale Waschbürste (4) und das zweite Behandlungsaggregat (3) eine horizontale Trocknungsdüse (8) umfasst.

9. Fahrzeugwaschanlage nach einem der vorhergehenden Ansprüche, **dadurch gekennzeichnet, dass** das die beiden Behandlungsaggregate (2, 3) über vertikale Führungen (5, 9) und Führungsschlitten (6, 10) voneinander beabstandet an dem Rahmen (1) vertikal verschiebbar geführt sind.

10. Fahrzeugwaschanlage nach einem der vorhergehenden Ansprüche, **dadurch gekennzeichnet, dass** der Rahmen (1) als verfahrbares Portal ausgebildet ist.

## Claims

1. Vehicle washing installation with a first treatment unit (2) arranged so as to be adjustable in height on a frame (1), and with at least one second treatment unit (3) arranged so as to be adjustable in height on the frame (1), **characterised in that** the treatment units (2, 3) are coupled with a common driving motor (11) through a traction medium mechanism (12, 13, 14, 15) for reciprocal adjustment.

2. Vehicle washing installation according to claim 1, **characterised in that** the traction medium mechanism (12, 13, 14, 15) comprises a traction device (12) and deflection rollers (13, 14, 15) through which the traction device (11) is guided from a driving element (16) rotatable by the driving motor (11) to the first treatment unit (2).

3. Vehicle washing installation according to claim 2, **characterised in that** the driving motor (11) is fastened stationary on the frame (1) and the traction device (12) is guided through a loose deflection roller (13) arranged on the second treatment device (3) and two stationary deflection rollers (14, 15) arranged on the frame (1).

4. Vehicle washing installation according to claim 2, **characterised in that** the driving motor (11) is arranged on the height-adjustable second treatment unit (3) and the traction device (12) is guided through two stationary deflection rollers (14, 15) arranged on the frame (1).

5. Vehicle washing installation according to one of claims 2 to 4, **characterised in that** the traction device (12) is embodied as a cable, belt or chain.

6. Vehicle washing installation according to one of claims 1 to 5, **characterised in that** a locking device (17) is associated with at least one treatment unit (2, 3) for releasable locking of the treatment unit (1, 2) in an end position.

7. Vehicle washing installation according to claim 6, **characterised in that** the locking device (17) comprises an adjustable stop (18) which is adjustable between a locking and an unlocking position by means of an adjusting drive (19).

8. Vehicle washing installation according to one of claims 1 to 7, **characterised in that** the first treatment unit (2) comprises a horizontal washing brush (4) and the second treatment unit (3) comprises a horizontal drying nozzle (8).

9. Vehicle washing installation according to one of the preceding claims, **characterised in that** the two treatment units (2, 3) are guided so as to be displaceable vertically on the frame (1) by means of vertical guides (5, 9) and guide slides (6, 10) a distance from one another.

10. Vehicle washing installation according to one of the preceding claims, **characterised in that** the frame (1) is embodied as a travelling portal.

## Revendications

1. Station de lavage de véhicules avec une unité de traitement (2) réglable sur la hauteur montée sur un cadre (1)et au moins une deuxième unité de traitement (3) réglable sur la hauteur montée sur le cadre (1), **caractérisée en ce que** les unités de traitement (2, 3) sont couplées par un dispositif de traction (12, 13, 14, 15) avec un moteur d'entrainement commun (11) servant à leur réglage mutuel.

2. Station de lavage de véhicules selon la revendication 1, **caractérisée en ce que** le dispositif de traction (12, 13, 14, 15) comporte un organe de traction (12) et des poulies de renvoi (13, 14, 15) par lesquelles l'organe de traction est amené jusqu'à la première unité de traitement (2) par un élément d'entrainement (16) mis en rotation par le moteur d'entrainement (11).

3. Station de lavage de véhicules selon la revendication 2, **caractérisée en ce que** le moteur d'entrainement (11) est fixé sur le cadre (1) et l'organe de traction (12) passe par une poulie de renvoi mobile (13) montée sur la deuxième unité de traitement (3) et par deux poulies de renvoi stationnaires (14, 15) montées sur le cadre (1).

4. Station de lavage de véhicules selon la revendication 2, **caractérisée en ce que** le moteur d'entrainement (11) est monté sur la deuxième unité de traitement (3) réglable en hauteur et l'organe de traction (12) passe par deux poulies de renvoi stationnaires (14, 15) montées sur le cadre (1).

5. Station de lavage de véhicules selon l'une des revendications 2 à 4, **caractérisée en ce que** l'organe de traction (12) consiste en une corde, une chaîne ou une courroie.

6. Station de lavage de véhicules selon l'une des revendications 1 à 5, **caractérisée en ce qu'**un dispositif de verrouillage (17) servant à arrêter l'unité de traitement (1, 2) en position finale est affecté à au moins une unité de traitement (2, 3).

7. Station de lavage de véhicules selon la revendication 6, **caractérisée en ce que** le dispositif de verrouillage (17) comporte une butée réglable (18) pouvant être positionnée entre une position de verrouillage et une position de déverrouillage par un organe moteur (19).

8. Station de lavage de véhicules selon l'une des revendications 1 à 7, **caractérisée en ce que** la première unité de traitement (2) comporte une brosse de lavage horizontale (4) et la deuxième unité de traitement (3) comporte une tuyère de séchage horizontale (8).

9. Station de lavage de véhicules selon l'une des revendications précédentes, **caractérisée en ce que** les deux unités de traitement (2, 3) se déplacent à distance l'une de l'autre à la verticale sur des guidages (5, 9) et des chariots de guidage (6, 10) verticaux le long du cadre.

10. Station de lavage de véhicules selon l'une des revendications précédentes, **caractérisée en ce que** le cadre (1) consiste en un portail mobile.
